# EUROPEAN PATENT SPECIFICATION

(11) **EP 3 359 361 B1**
(45) Date of publication and mention of the grant of the patent: **01.07.2020**
(21) Application number: 16815649.5
(22) Date of filing: 22.11.2016
(51) Int. Cl.: B29B 7/18, B29B 7/20, B29B 7/26, B29B 7/74, B29C 48/00, B29C 48/525, B29C 48/07, B29C 48/355, B29C 48/375, B29C 48/40, B29C 48/91, B29K 21/00

(54) **PROCESS FOR PRODUCING AN ELASTOMERIC COMPOUND**
VERFAHREN ZUR HERSTELLUNG EINER ELASTOMERVERBINDUNG
PROCÉDÉ DE PRODUCTION D'UN COMPOSÉ ÉLASTOMÈRE

(30) Priority: 04.12.2015 IT UB20156274
(43) Date of publication of application: 15.08.2018
(73) Proprietor: Pirelli Tyre S.p.A., 20126 Milano (IT)
(72) Inventor: PESSINA, Roberto, 20037 Paderno Dugnano (IT)
(74) Representative: Tirloni, Bartolomeo
(86) International application number: PCT/IB2016/057030
(87) International publication number: WO 2017/093849

(56) References cited:
- EP-A1- 1 552 914
- EP-A2- 1 543 930
- WO-A1-2005/039847
- CN-U- 201 664 991
- US-A- 4 877 468
- US-A1- 2011 067 800
- US-A1- 2014 227 379
- US-B2- 6 881 049

## Description

The present invention relates to a process for producing an elastomeric compound reinforced with silica-based fillers and to a relative process for producing tyres for vehicle wheels.

The production of elastomeric compounds for the production of tyres may include the use of a batch (or discontinuous) mixing device in which the elastomeric polymer is mixed with the reinforcement filler, typically carbon black and/or silica-based reinforcement fillers.

Advantageously, the batch mixer is associated with a conveyor, dump or batch-off device adapted to receive at a large inlet mouth the entire batch unloaded from the batch mixer and convey it (typically by means of one or more helical screws housed in an inner chamber) through the length thereof from the inlet mouth to the outlet mouth, further imparting an elongated shape to the compound at the outlet mouth which lends itself to subsequent handling or storage better than the massive shape of the compound in output from the batch mixer. For example, the conveyor device may be provided at the inlet mouth thereof with a hopper arranged beneath the outlet mouth of the batch mixer, such hopper receiving the entire batch all at once by gravity. From the hopper, the batch is then progressively pushed within the inner chamber (and hence conveyed to the outlet) in relatively short times.

In the present description and in the following claims, the term "discontinuous or batch mixing device (or mixer)" means a mixing device adapted to be periodically fed with the elastomeric compound components in predefined amounts and mix them for a predetermined time so as to obtain a batch of elastomeric compound. At the end of mixing, the entire batch of elastomeric compound obtained is fully unloaded from the mixing device in a single solution.

The batch mixing device differs from the "continuous mixing device", i.e. a mixing device adapted to receive in continuous feeding the basic ingredients (e.g. polymers, reinforcement fillers, plasticisers, resins, etc.) of the elastomeric compound, typically by means of controlled dosage dispensers, mix them in order to produce the elastomeric compound and unload the elastomeric compound in a continuous stream (except for possible stops of the mixing device due to maintenance, or elastomeric compound recipe change) in contrast to the periodic loading/unloading of the batch mixing device. In the jargon of the mixers for elastomeric compounds, the continuous mixing device is sometimes indicated by the term 'mixing extruder', which is herein considered as equivalent to 'continuous mixer'.

The continuous mixer (in particular its active elements, such as screws or mixer satellites) is then provided with mixing portions able to impart a high shear stress to the compound and, alternating with the mixing portions, transport portions able to impart a thrust to the compound being processed to feed it from one longitudinal end to the other of the inner chamber. It may further be provided with possible redistribution portions.

Examples of continuous mixing devices are continuous twin-screw or multi-screw (e.g. ring mixers), co-penetrating and counter-rotating, or planetary mixing devices.

Both the batch mixing device and the continuous mixing device are able to provide sufficient energy to the elastomeric compound to mix and disperse the reinforcement filler in the elastomeric polymer also in case of cold-feeding of the ingredients, and chew the elastomeric material thereby increasing the temperature thereof in order to make it workable and plastic to facilitate the incorporation and/or distribution of the ingredients within the polymeric matrix, unlike other elastomeric compound handling devices, such as the conveying or unloading devices described above.

The compounds reinforced with silica-based fillers are employed in the production of elastomeric semi-finished products for tyres, such as tread bands, since for example these compounds allow reducing the rolling resistance of the tyre.

Silica is chemically bonded to the polymer base as a result of reaction with a silica coupling agent typically formed by a silane agent (in short, "silane"). In fact, a part of the silane reacts with the hydrophilic surface of silica and another part with the hydrophobic polymer base.

In the present description, the term 'silanisation' means the step of the mixing process in which a substantial part (e.g. at least 50%) of the desired chemical reaction between silica-based filler and silane agent is obtained.

WO 00/59699 describes a process for the production of a rubber compound filled with silica which uses a closed batch mixer having a pair of tangential or co-penetrating rotors and a piston arranged above the rotors and movable to and from the pair of rotors to press the ingredients between the rotors. The process comprises a step of uniform dispersion of the silica filler in the polymer base, conducted at increasing temperature, followed by a silanisation step conducted at substantially constant temperature and with substantially constant rotation speed of the rotors. The step of mixing the silica filler in the polymer base comprises at least three processing cycles carried out at gradually decreasing rotation speed of the rotors, and at substantially increasing temperature obtained by at least three power peaks obtained by lowering the piston towards the pair of rotors.

WO 2005/039847 A1 describes a machine and a relative method for mixing and extruding rubber- or silicone-based plastic materials, comprising an unloading extruder with a pair of converging conical screws arranged in a buffer chamber, in which the outlet of the unloading extruder is temporarily obstructed by a removable closed flange, the buffer chamber also serving as compound preparation chamber.

US 2011/067800 A1 discloses a process for producing an elastomeric compound.

The Applicant has noted that in the preparation of elastomeric compounds reinforced with silica-based fillers for the production of tyres, a substantial part of the desired silica-silane reaction typically takes place during a final mixing step inside a batch mixer ('silanisation'), subsequent to the mixing of the silica-based charge in the polymer base. The silane-silica reaction during silanisation is typically thermally activated while maintaining the temperature in a range of between 135-140 °C ('silanisation plateau') for a predetermined time interval (typically from 30 to 180 seconds), with the rotors of the batch mixer rotating at low speed (typically between 5 and 10 revolutions per minute).

The Applicant has noted that such a silanisation step requires the use of the batch mixer for a considerable time interval, thereby limiting the hourly output of the batch mixer.

Moreover, the Applicant has noted that in the production of a series of elastomeric compound batches in succession using a pair of devices formed by a batch mixer and an unloading device, a dead time is generated in which the unloading device remains stationary, since when it has completed the unloading of one batch until it receives the next batch that the batch mixer has finished working.

The Applicant has also noted that the need to control the temperature within a narrow range of values during the silanisation preferably requires, in the industrial field, the use of a batch mixer of the type with co-penetrating rotors. The latter in fact has a surface/volume ratio of the mixing chamber (which determines the ratio between the cooling surface of the mixer and the compound mass) about one and a half higher than the batch mixer of the type with tangential rotors. Therefore, it allows a better control of the temperature during silanisation, unlike the batch mixer of tangential type for which it is more complex, in an industrial environment, to prevent an excessive increase of the temperature.

However, the Applicant has realised that, for the same dimensions of the mixer, the mixer of the type with co-penetrating rotors has a rate of filling of the inner chamber lower than that of tangential type (typically about 65% versus 75%, respectively), with consequent reduction in the output to the disadvantage of the mixer with co-penetrating rotors.

The Applicant, in the context of an industrial process for the production of tyres, has set itself the problem of developing a process for producing an elastomeric compound reinforced with silica-based fillers that allows increasing the productivity of the pair of machines consisting of a batch mixer, used for the dispersion of the silica-based filler in the polymer base, and of a respective unloading device associated therewith, while ensuring (if not even improving) the desired chemical-physical features of the elastomeric compound produced, before and after vulcanisation, and the desired performance of the tyre produced using such compound, all while maintaining the overall cost of the production process of the elastomeric compound contained, including the costs of purchase, maintenance and operation of the machines and sites used.

The Applicant has found that the above problem is solved by a process for producing an elastomeric compound according to the present invention, wherein the mixing in a batch mixer is followed by a silanisation step carried out in a twin-screw conical mixer with closed outlet mouth.

The invention relates to a process according to claim 1 for producing an elastomeric compound comprising at least one elastomeric polymer, at least 10 phr of a silica-based reinforcement filler and at least one silane coupling agent, the process comprising:
- providing a batch mixer comprising a mixing chamber, a pair of rotors housed in the mixing chamber and a piston arranged above the rotors and movable to and from the pair of rotors;
- feeding said batch mixer with said at least one elastomeric polymer, said silica-based reinforcement filler and said at least one silane coupling agent;
- mixing, in said batch mixer and for a first predetermined time interval, said elastomeric polymer, said silica-based reinforcement filler and said silane coupling agent in a manner so as to obtain a batch of an intermediate compound wherein said silica-based reinforcement filler is dispersed in said elastomeric polymer;
- completely unloading said batch of intermediate compound from said batch mixer;
- providing a twin-screw conical mixer having a mixing chamber provided with an inlet mouth and an outlet mouth, wherein the mixing chamber houses two conical screws, counter-rotating and converging towards the outlet mouth, the twin-screw conical mixer being provided with a door adapted to assume a closed configuration of said outlet mouth and an open configuration of said outlet mouth;
- feeding said twin-screw conical mixer with said batch of intermediate compound;
- mixing said intermediate compound in said twin-screw conical mixer with said door in said closed configuration of said outlet mouth for a second predetermined time interval and under temperature control, in order to obtain said elastomeric compound;
- unloading said elastomeric compound from said outlet mouth of the twin-screw conical mixer with said door arranged in said open configuration, wherein in said unloaded elastomeric compound, an amount of said silane coupling agent has reacted with said silica-based reinforcement filler, said amount being greater than or equal to 50% of the fed silane coupling agent,
and wherein at least 50% of said amount di silane coupling agent has reacted with said silica-based reinforcement filler during said step of mixing said intermediate compound in said twin-screw conical mixer with the door in said closed configuration.

The Applicant has in fact surprisingly found that it is also possible to carry out the entire silanisation step in a twin-screw conical mixer with the outlet mouth closed by the door.

Taking advantage of such a finding, the Applicant has realised that the above process, wherein the silanisation step is not carried out or is only partially carried out in the batch mixer, but rather is substantially or completely carried out in the twin-screw conical mixer with closed door, allows considerably reducing the mixing time of each batch in the batch mixer itself, making it available for a new batch of compound while the twin-screw conical mixer performs the silanisation step. For example with the present invention, the mixing cycle in the batch mixer is advantageously shortened by at least about 30 s, and up to about 180 s (depending on the desired silanisation percentage and/or the amount of silane introduced), compared to a traditional mixing process including silanisation.

Moreover, the hourly productivity of the pair formed by the batch mixer and the twin-screw conical mixer is increased compared to that which is traditionally obtained from the pair formed by the batch mixer and the unloading device associated therewith.

In fact, the Applicant notes that a further advantage of the present invention is that the twin-screw conical mixer, in addition to performing the above silanisation step with the door closed, also performs the function of taking away from the batch mixer the compound batch unloaded from the latter, a function which typically is carried out by a specially dedicated unloading device.

An example of unloading device is the twin-screw conical extruder, having a pair of screws converging towards the outlet mouth but devoid of closing door, which however does not exert a sufficiently intense mixing action to obtain the effects of the present invention.

In that regard, the Applicant notes that the twin-screw conical mixer has a mixing chamber with 'conical' shape, wherein the inlet portion of the mixing chamber, opposite to the outlet mouth, is much larger than the portion close to the outlet mouth. Therefore, the inlet mouth, typically horizontal and located at the inlet portion and in the vicinity of the screws, is sufficiently large to allow accepting a whole batch (typically around 200-400 kg) unloaded from the batch mixer in a short time and transferring it to the mixing chamber with a temperature similar to that at which it exits from the batch mixer. This solves the problem of compatibility between the output of the batch mixer and the input of the twin-screw conical mixer, for example by avoiding having to shred the intermediate compound for quickly feeding the silanisation mixer in a controlled manner.

Moreover, the intermediate compound is prevented from cooling before the entire batch is completely fed to the twin-screw conical mixer, resulting in additional work and/or energy consumption and/or time to bring it back up to temperature in the twin-screw conical mixer and/or resulting in possible defects in the reaction between silane and silica.

Moreover, the twin-screw conical mixer has a mixing chamber sufficiently large to accommodate and work the whole compound batch exiting from the batch mixer, for the typical dimensions of the latter in an industrial context.

Moreover, the twin-screw conical mixer imparts a shape (typically a strip having a section shaped as an "8") to the unloaded elastomeric compound (once the door has been opened) which is suitable for subsequent handling.

Therefore, the Applicant knows that the twin-screw conical mixer of the present invention can fully replace the unloading device conventionally used, carrying out the above functions of carry the material away from the batch mixer and of imparting a shape suitable for subsequent handling and/or storage.

In other words, the present invention does not involve an increase in the number of devices necessary for the production of the elastomeric compound compared to conventional methods, nor a substantial increase of their complexity and/or their overall dimensions and/or their purchase/operation/maintenance cost, while achieving the above increase in their overall hourly productivity.

In fact, a shortening of the process time of each single batch in the batch mixer is accompanied by an increased use of the twin-screw conical mixer with respect to the conventional use of an unloading device, thereby occupying the above dead time of non-usage of the unloading device (replaced in the present invention by the twin-screw conical mixer).

In conclusion, the pair formed by the batch mixer and the twin-screw conical mixer (which also serves as an unloading device) is used in an optimal manner, with shortening of the dead times of the single machines and increase in the overall hourly productivity.

The Applicant has also identified a further advantage of the present invention in that compared to other mixers, the twin-screw conical mixer is simple, cost-effective, space-saving and involves a modest energy consumption.

According to the Applicant, a further advantage of the present invention lies in the possibility of controlling the thermal profile provided by the twin-screw conical mixer in a precise, efficient and easy manner.

Moreover, it is believed that the present invention entails a modest manual workload.

Preferably, at least 60%, more preferably at least 70%, even more preferably at least 80% of said amount di silane coupling agent has reacted with said silica-based reinforcement filler during said step of mixing said intermediate compound in said twin-screw conical mixer with the door in said closed configuration. According to the present invention, the bulk of the overall silica-silane reaction takes place in the twin-screw conical mixer in order to maximise the overall efficiency of the process and/or the quality of such a reaction product.

Preferably, in said intermediate compound batch unloaded from the batch mixer, the percentage of silanisation is less than or equal to 30%, more preferably less than or equal to 20%. In this way, the silane coupling agent has not substantially reacted with the silica-based reinforcement filler in the batch mixer. It is noted in this regard that, although the silanisation preferably takes place in the twin-screw conical mixer, it cannot be excluded, and indeed it typically occurs, that a modest amount of the silane coupling agent introduced in the batch mixer reacts with the silica during the mixing in the batch mixer.

The silica-silane reaction is in fact a function of the contact time and temperature, and both the mixing interval in the batch mixer and the relative temperature (typically increasing in the course of mixing from about 60 °C upon feeding up to about 130 °C upon unloading) are such as to cause the silica-silane reaction, although to a modest extent.

Typically, the processing of the material in the batch mixer comprises one or more of the following steps.

During the feeding, the piston is raised and the rotors are in rotation. Subsequently, the piston is lowered and the rotors 'chew' the ingredients to incorporate the filler in the elastomer, possibly with a break in which the piston is raised and lowered again to clean any residues. Once the incorporation has been carried out, the piston is raised for the possible feeding of a residual fraction of filler and/or plasticiser oils. Some material processing cycles follow (typically 2 or 3) in which the filler is dispersed (i.e. the dimensions of the agglomerates are reduced and homogenised as much as possible) and distributed (i.e. the agglomerates are spatially distributed as evenly as possible) in the elastomer. At the end of this process, the compound is unloaded.

In order to monitor and control the mixing process, as is known in the art, some parameters are measured over time, such as typically the temperature of the compound, the power absorbed by the rotor motors, the piston stroke, the rotation speed of the rotors, and they are compared, typically in real time, with predetermined respective process curves.

In order to determine the time instant at which the intermediate compound has to be unloaded, namely the instant during the mixing at which the compound is sufficiently processed so that the filler is dispersed in the elastomer, but at which at most only a modest amount of silane has reacted with the silica, the Applicant has proceeded by subtracting, from the conventional mixing process fully performed in the batch mixer, the final silanisation step. In other words, the intermediate compound is unloaded at the instant of time at which, in the conventional mixing process, the processing steps of the compound have ended (steps which are then identified through said monitoring of process parameters) and the temperature plateau begins at 135-140 °C, which corresponds to silanisation.

By taking samples of intermediate compound thus obtained, the Applicant has verified that in the intermediate compound, at most a modest fraction of the silane content introduced has already reacted with the silica.

Conversely, by taking the respective compound of samples obtained at the end of the conventional process (inclusive of silanisation in the batch mixer) and at the end of the silanisation process in the twin-screw conical mixer as described above, the Applicant has verified on the one hand that the percentage of silanisation is comparable (i.e. an equal amount of silane has reacted with the silica in the two processes), and on the other hand, by comparison with the above-mentioned intermediate compound samples, that a substantial fraction (e.g. at least 50%) of the overall amount of silane that has reacted with the silica, has reacted during the silanisation step in the batch mixer (during the 'silanisation plateau') and in the twin-screw conical mixer, respectively.

Preferably, in said elastomeric compound unloaded from the twin-screw conical mixer, the percentage of silanisation is greater than or equal to 70%, more preferably greater than or equal to 80%, even more preferably greater than or equal to 90%. In this way, the silica-silane reaction can be said to have substantially occurred.

By "percentage of silanisation" it is meant the percentage by weight of silane coupling agent which has reacted with the silica with respect to the total weight of silane coupling agent available for the silica-silane reaction.

The determination of the percentage of silanisation was carried out as follows: on a sample of elastomeric compound, the unreacted silane is extracted by a solvent (for example by means of anhydrous ethanol) placed in contact with the sample to be analysed for a predetermined number of hours (e.g. 24 hours), and the silane that has reacted is calculated by the difference with the amount of silane specifically introduced to react with the silica, which is known and predetermined.

It is noted as regards the silica-silane reaction that some recipes of elastomer compounds (such as tread compounds for high grip on wet surfaces) involve the introduction of a smaller amount of silane than that which could ideally react with the silica content (such as less than 5-10% of the silica content), in order to leave a predetermined amount of free silica-based filler also after complete reaction with the silane (ideally, a percentage of silanisation equal to 100%, although typically it actually remains some percentage points lower). Alternatively or in addition to the adjustment of the silane amount, in order to leave free silica-based filler, it is possible to predetermine a target value of the percentage of silanisation significantly lower than 100%, such as 70-80%, e.g. by configuring some process parameters such as the temperature during silanisation and/or the time interval of silanisation. In this case, the amount of silane that remains unreacted can act as a sulphur donor during the vulcanisation.

Conversely, some recipes of elastomeric compounds involve the introduction of a higher amount of silane than that which could ideally react with the silica-based filler content (for example more than 5% of the silica-based filler content), in order to leave, also in case of complete reaction with the silane, a predetermined amount of unreacted silane that can act as a sulphur donor during the vulcanisation. Also in this case, a certain amount of unreacted silane remains available to yield sulphur in the vulcanisation. From the above, it is understood that the target value of the final silanisation percentage is referred to the total content of silane coupling agent available for the reaction with the silica. For example, each amount of silane which exceeds the amount of silane that can react with the silica-based filler is not taken into account. Moreover, this target value of the percentage of silanisation is not necessarily equal or close to 100%.

Preferably, a total content by weight (for example expressed in phr) of said silane coupling agent fed to said batch mixer is greater than or equal to 4% by weight (for example, expressed as phr introduced in the compound) of said silica-based reinforcement filler, more preferably greater than or equal to 5%.

Preferably, a total content by weight of said silane coupling agent fed to said batch mixer is less than or equal to 15% by weight of said silica-based reinforcement filler, more preferably less than or equal to 10%. In this way, a correct balance between the two silica-silane reagents is obtained.

Preferably, a total content of said silane coupling agent fed to said batch mixer is greater than 0.1 phr, more preferably greater than or equal to 0.5 phr, and/or less than 20 phr, more preferably less than or equal to 10 phr.

The abbreviation "phr" means the parts by weight per hundred parts by total weight of elastomeric polymer.

Preferably, said silane coupling agent is selected from those having at least one hydrolysable silane group which can be identified, for example, by the following general formula (I):

(R')3Si-CnH2n-X (I)

wherein the R' groups, equal or different from each other, are selected from: alkyl, alkoxy or aryloxy groups or from halogen atoms, provided that at least one of the R' groups is an alkoxy or an aryloxy group; n is an integer of between 1 and 6, ends included; X is a group selected from: nitrose, mercapto, amino, epoxide, vinyl, imide, chloro, -(S)mCnH2n-Si-(R')3 and -S-COR', wherein m and n are integers of between 1 and 6, end included and the R' groups are as defined above.

Among the silane coupling agents, those particularly preferred are the following: bis(2-triethoxysilyl-propyl)tetrasulphide, bis(3-trimethoxysilyl-propyl)tetrasulphide, bis(2-trimethoxysilyl-ethyl)tetrasulphide.

Preferentially, bis(3-triethoxysilyl-propyl)tetrasulphide is used, such as the silane commercially known by the initials Si 69 and marketed by Evonik.

Said silane coupling agent can be introduced as such or mixed with an inert filler (for example carbon black), in order to facilitate its incorporation into the elastomeric compound.

The expression "silica-based reinforcement filler" (or in short also "silica") is meant to denote a reinforcement agent based on silicon dioxide (actual silica), silicates and mixtures thereof, typically having a surface area, measured according to the BET method, of between 80 and 220 m²/g, preferably between 160 and 180 m²/g.

Preferably, the total content of silica-based reinforcement filler in said elastomeric compound is greater than 20 phr, more preferably greater than 30 phr, even more preferably greater than or equal to 50 phr, and/or less than 120 phr, more preferably less than or equal to 100 phr.

Preferably, the elastomeric compound may incorporate one or more additional reinforcement fillers, for example selected from: carbon black, alumina, calcium carbonate, kaolin or mixtures thereof.

Preferably, the total content of reinforcement filler in said elastomeric compound is greater than 40 phr, more preferably greater than 50 phr, even more preferably greater than or equal to 60 phr, and/or less than 120 phr, more preferably less than or equal to 100 phr.

The total content of the elastomeric polymer (100 phr) in said elastomeric compound can be achieved by incorporating different elastomeric polymers.

Preferably, said at least one elastomeric polymer is selected from: diene elastomeric polymers and mono-olefin elastomeric polymers, or mixtures thereof.

An elastomeric diene can be selected, for example, from elastomeric polymers or copolymers with an unsaturated chain having a glass transition temperature (Tg) generally lower than 20 °C, preferably in the range from about 0 °C to about -110 °C. These polymers or copolymers may be of natural origin or may be obtained by solution polymerisation, emulsion polymerisation or gas-phase polymerisation of one or more conjugated diolefins, optionally blended with at least one co-monomer selected from monovinylarenes and/or polar co-monomers. Preferably, the resulting polymers or copolymers contain said at least one co-monomer selected from mono-vinylarenes and/or co-polar monomers in an amount of not more than 60% by weight. Examples of diene elastomeric polymers are: cis-1,4-polyisoprene (natural or synthetic rubber, preferably natural rubber), 3,4-polyisoprene, poly-1,3-butadiene (in particular, highly vinyl poly-1,3-butadiene having a content of 1,2-polymerized units of from about 15% to about 85% by weight), polychloroprene, optionally halogenated isoprene/isobutene copolymers, 1,3-butadiene/acrylonitrile copolymers, 1,3-butadiene/styrene copolymers, 1,3-butadiene/isoprene copolymers, isoprene/styrene copolymers, isoprene /1,3-butadiene/styrene terpolymers; or mixtures thereof.

Mono-olefin elastomeric polymers may be selected, for example, from: ethylene copolymers with at least one alpha-olefin having from 3 to 12 carbon atoms, and optionally with a diene having from 4 to 12 carbon atoms; poly-isobutene, copolymers of isobutene and at least one diene. The following are particularly preferred: ethylene/propylene (EPR) copolymers; ethylene/propylene/diene (EPDM) terpolymers; polyisobutene; butyl rubbers; halobutyl rubbers; or mixtures thereof.

Preferably, the entire content of elastomeric polymer and/or of silica-based reinforcement filler and/or of silane coupling agent of the elastomeric compound is fed into said batch mixing device.

Preferably, the following is further included:
- providing a final mixer;
- feeding said final mixer with said elastomeric compound and with ingredients capable of facilitating the cross-linking;
- mixing, in said final mixer, said ingredients capable of facilitating the cross-linking with said elastomeric compound in order to obtain a vulcanisable final elastomeric compound;
- unloading said final elastomeric compound from said final mixer.

Preferably, said final elastomeric compound comprises a total amount of ingredients capable of facilitating the cross-linking greater than 1 phr, more preferably greater than 2 phr, and/or less than or equal to 10 phr, more preferably less than or equal to about 7 phr.

Preferably, said ingredients capable of facilitating the cross-linking comprise vulcanising agents for example selected from sulphur or sulphur-containing molecules (sulphur donors), or mixtures thereof.

Preferably, said ingredients capable of facilitating the cross-linking comprise accelerating agents selected, for example, from the group: dithiocarbamates, guanidine, thiourea, thiazoles, sulphenamides, thiurams, amines, xanthates, or mixtures thereof.

Preferably, all the content in said ingredients capable of facilitating the cross-linking of the final elastomeric compound is fed into said final mixer.

Preferably, in addition to said at least one elastomeric polymer, said silica-based reinforcement filler, said silane coupling agent, and said ingredients capable of facilitating the cross-linking, at least one of the following ingredients may be present in the final elastomeric compound:
- activators, such as zinc compounds, and in particular ZnO, ZnCO3, zinc salts of saturated or unsaturated fatty acids containing from 8 to 18 carbon atoms, such as, for example, zinc stearate, which are preferably formed in situ in the elastomeric compound from ZnO and fatty acid, as well as BiO, PbO, Pb₃O₄, PbO₂, or mixtures thereof.
- additives selected on the basis of the specific application for which the compound is designed such as, for example, antioxidants, anti-ageing agents, plasticisers (such as plasticising oils), tackifiers, anti-ozone agents, reinforcement resins, or mixtures thereof.

Preferably, the following is further included:
- providing an intermediate mixer;
- feeding said intermediate mixer with said elastomeric compound unloaded from the twin-screw conical mixer and with one or more of the following ingredients: activators containing zinc compounds and anti-aging agents containing amino groups;
- mixing, in said intermediate mixer, said activators containing zinc compounds and/or components containing amino groups with said elastomeric compound;
- unloading the mixed elastomeric compound from said intermediate mixer.

Preferably, said ingredients containing amino groups are anti-ageing and/or anti-ozonation agents.

In this way, advantageously, any ingredients of the final elastomeric compound that compete in the reaction between silica and silane, as precisely zinc compounds and compounds containing amino groups, are introduced only once the silica-silane reaction has taken place, in order not to interfere with it. In this case the elastomeric compound fed to said final mixer will be the elastomeric compound unloaded from said intermediate mixer, rather than that unloaded from the twin-screw conical mixer. In other words, the mixing in the intermediate mixer is interposed between the silanisation in the twin-screw conical mixer and the final mixing.

Preferably, said final mixer and/or said intermediate mixer is of batch type, comprising a mixing chamber, a pair of rotors housed in the mixing chamber and a piston arranged above the rotors and movable to and from the pair of rotors. For example, said final and/or intermediate mixer may be of type similar to said batch mixer or even physically coincide with said batch mixer.

Preferably, said screws of the twin-screw conical mixer are helical screws with variable pitch, typically with a pitch that decreases monotonically going towards the outlet mouth.

Preferably, said screws are co-penetrating.

Preferably, said screws of the twin-screw conical mixer rotate at the same speed.

Preferably, said second predetermined mixing time interval in said twin-screw conical mixer with door closed is greater than or equal to 30 seconds, more preferably greater than or equal to 60 seconds, even more preferably greater than or equal to 90 seconds, and/or less than or equal to 300 s, more preferably lower than or equal to 250 s. In this way, the silanisation has time to take place and also the process time of the twin-screw conical mixer remain comparable with the process time of the batch mixer, in order to maximise the hourly output of the pair of machines.

Preferably, said mixing in said twin-screw conical mixer takes place by alternating at least one step (more preferably at least two steps) of mixing with normal rotation of the screws with at least one step (more preferably two steps) of mixing with reversed rotation of the screws. By normal rotation it is meant the rotation with which the screws advance the material towards the outlet mouth. By reversed rotation it is meant a rotation in the opposite direction to that of normal rotation.

Preferably, said step (or each of said steps) of mixing with normal rotation lasts a time interval greater than or equal to 20 s, and/or less than or equal to 60 s.

Preferably, said step (or each of said steps) of mixing with reversed rotation lasts a time interval greater than or equal to 5 s, and/or less than or equal to 30 s.

The Applicant has realised that advantageously, the alternation of mixing with normal and reversed rotation improves the mixing and the uniformity of the material, and therefore facilitates the silica-silane reaction.

Preferably, said screws rotate at a speed less than or equal to 130 rpm (revolutions per minute), more preferably less than or equal to 100 rpm, and/or greater than or equal to 20 rpm.

Preferably, during mixing in said twin-screw conical mixer, a temperature in the inner mixing chamber is maintained greater than or equal to 120 °C, and/or less than or equal to 150 °C, more preferably less than or equal to 140 °C. Advantageously on the one hand this accelerates the silica-silane reaction, on the other hand this prevents the phenomenon of scorching of the compound, i.e. undesired cross-linking of the elastomer due to the presence of the silane which is able to donate sulphur.

Preferably, during the mixing in said twin-screw conical mixer, a temperature in the inner mixing chamber is controlled by varying a rotation speed of the screws.

Preferably, said screws have a maximum diameter (at the inlet portion) smaller than or equal to 1000 mm, more preferably smaller than or equal to 900 mm, and/or greater than or equal to 500 mm, more preferably greater than or equal to 600 mm.

Preferably, said screws have a minimum diameter (at the outlet mouth) smaller than or equal to 500 mm, more preferably smaller than or equal to 400 mm, and/or greater than or equal to 100 mm, more preferably greater than or equal to 200 mm.

Preferably, said screws have a length smaller than or equal to 2000 mm, more preferably smaller than or equal to 1500 mm, and/or greater than or equal to 500 mm, more preferably greater than or equal to 700 mm.

Preferably said screws together form (in the proximity of the outlet mouth) an acute angle (with reference to the rotation axes of the screws) less than or equal to 30°, more preferably less than or equal to 20°, and/or greater than or equal to 10°, more preferably greater than or equal to 12°.

Preferably, each of said screws is driven by a motor having power of less than or equal to 300 kW, more preferably less than or equal to 200 kW and/or greater than or equal to 80 kW, more preferably greater than or equal to 100 kW. In this way, the silanisation process is low energy consumption.

Preferably, said twin-screw conical mixer comprises a loading hopper having a lower end at the inlet mouth and an upper end at an unloading mouth of said batch mixer.

Preferably, said loading hopper is configured to connect without interruption the mixing chamber of the batch mixer with the mixing chamber of the twin-screw conical mixer. Advantageously in this way, the compound is not in contact with the external environment.

Preferably, the twin-screw conical mixer comprises a suction pump in fluid connection with said inner chamber of the twin-screw conical mixer, more preferably having a suction mouth at the loading hopper. Advantageously in this way, the silanisation by-products, typically in the form of vapour, such as water and/or ethanol, can be suctioned.

In one embodiment, said twin-screw conical mixer is not fed with any further ingredient of the elastomeric compound, apart from said intermediate compound.

Preferably, said inlet mouth has a section which develops in the vicinity of the screws, more preferably parallel to the screws.

Preferably, said inlet mouth of the twin-screw conical mixer has a section having an area greater than or equal to 2000 cm², more preferably greater than or equal to 3000 cm². Advantageously, in this way it is possible to load all the batch of intermediate compound into the inner chamber of the twin-screw mixer in a short time.

Preferably, said inner chamber of the twin-screw conical mixer has a useful volume for mixing the compound (i.e. the free volume available for processing the compound) greater than or equal to 100 litres, more preferably greater than or equal to 150 litres. In this way, advantageously, the twin-screw mixer can simultaneously process the entire batch of intermediate compound.

Preferably, said batch of intermediate compound has a total weight greater than or equal to 100 kg and/or less than or equal to 500 kg.

Preferably, the mixing in said batch mixer is carried out at a rotor speed, typically inconstant, greater than or equal to 10 revolutions per minute and/or less than or equal to 80 revolutions per minute, more preferably between 20 and 60 revolutions per minute.

Preferably, said first mixing time interval in said batch mixer is greater than 100 s, more preferably greater than or equal to 150 s, and/or less than or equal 500 s, more preferably less than or equal to 400 s.

Preferably, said rotors are counter-rotating.

Said rotors may be of tangential or co-penetrating type.

Particular examples of batch mixers that can advantageously be used according to the present invention are those known under the trademark Banbury® or Intermix®, depending on whether the rotors work mutually tangentially or are co-penetrating, respectively.

Preferably, said rotors are of tangential type. The Applicant notes that such a solution differs from the consolidated industrial standard described above and it involves the use of a batch mixer of the type with co-penetrating rotors for the production of an elastomeric compound, since such mixer ensures optimum control of the temperature. On the contrary, the Applicant has found that the present invention, in which the silanisation is carried out outside the batch mixer, enables the use of a batch mixer of the type with tangential rotors which, compared to that with co-penetrating rotors, with a lower temperature control (no longer strictly necessary), however, allows for a greater output of compound with the same dimensions, due to the better filling rate of the inner chamber.

Preferably, feeding said twin-screw conical mixer with said batch of intermediate compound takes place immediately after the unloading of the batch of intermediate compound from the batch mixer. Preferably, the temperature of the intermediate compound fed to said twin-screw conical mixer is substantially equal to the temperature of the intermediate compound unloaded from the batch mixer, more preferably greater than or equal to 60 °C, even more preferably greater than or equal to 80 °C. In this way, the energy necessary to bring the compound to temperature for the silica-silane reaction is saved.

Preferably, it is contemplated to shape said elastomeric compound unloaded from said twin-screw conical mixer (and/or from said intermediate mixer and/or from said final mixer) in a sheet through the use of a sheeting device arranged downstream to the mixer. Said sheeting device may for example be a calender or an open mixer with counter-rotating rollers. In this way, advantageously, the compound acquires a suitable shape for subsequent handling and/or storage.

Preferably, said sheet-shaped elastomeric compound is cooled in a festoon system arranged downstream of said sheeting device. The festoon system advantageously conveys the compound away from the mixer.

Preferably, said cooled elastomeric compound is arranged pitched on a pallet and stored.

Preferably, said feeding of said final and/or intermediate mixer takes place after said cooling and/or said storage of the elastomeric compound.

The present invention further relates to a process for producing tyres as set forth in claim 15, and comprising:
- building a green tyre comprising at least one component comprising said final elastomeric compound,
- subjecting the green tyre to moulding and vulcanisation in order to obtain a finished tyre,
wherein said component is one of the various structural elements of the finished tyre selected from the group: tread band, under-layer, carcass layer, belt layer, sidewall, reinforced element, anti-abrasive layer. Preferably, said component is a tread band.

According to a typical process, the structural elements can be assembled subsequently using a suitable building apparatus to obtain a finished tyre.

On the other hand, alternative processes for building a tyre without using semi-finished products are known in the art.

In this regard, in the case of structural elements of tyres which substantially consist of an elastomeric compound such as, for example, the tread band, continuous elongated tape element is laid on a support bearing the tyre to be built, said continuous elongated tape element being arranged so as to form a plurality of consecutive coils in side by side and/or superposed relationship, to obtain a tyre in its final configuration. Alternatively, in the case of structural elements of a tyre which substantially consist of an elastomeric compound and at least one of the reinforcing cord elements such as, for example, a carcass ply, a belt layer, said continuous elongated tape element is associated with at least one reinforcing cord element to produce semi-finished products in the form of a rubber-covered cord or of a strip element comprising at least one reinforcing cord element, which are further laid on a support bearing the tyre to be built, in side by side and/or superposed relationship, in order to obtain a tyre in its final configuration.

The present invention will be illustrated in further detail by means of exemplary embodiments with reference to the accompanying figures, in which:
- Figure 1 shows an exemplary plant for producing an elastomeric compound according to the present invention;
- figure 2 shows a schematic and partial section of a twin-screw conical mixer used in the present invention.

Reference numeral 1 denotes an example of an industrial plant adapted to the execution of the process for producing a silica-filled elastomeric compound according to the present invention.

The plant comprises a batch mixer 101 comprising a mixing chamber, a pair of counter-rotating rotors housed in the mixing chamber and a piston (not shown) arranged above the rotors and movable to and from the pair of rotors. The batch mixing device is usually provided with a pneumatic or hydraulic cylinder arranged in the upper part of the mixing chamber for moving the piston upwards, to make the mixing chamber accessible, thus allowing the introduction of the components through special loading hoppers (not shown), and downwards, so as to exert a pressure on the material processed by the rotors and located above them. A hydraulic system arranged on the bottom of the mixing chamber moves a door for allowing the unloading of the intermediate elastomeric compound at the end of the mixing cycle by opening a dedicated unloading mouth 110.

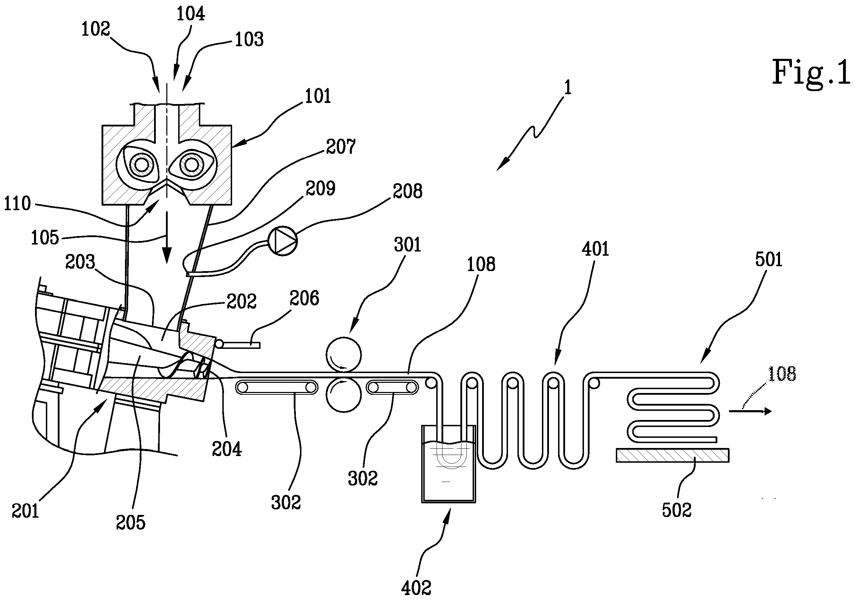

Figure 1 schematically shows a batch mixer with tangential rotors.

Typically in the industrial field, the inner volume of the mixing chamber is adapted to produce compound batches weighing a few hundred kg (200-400 kg).

Plant 1 further comprises a twin-screw conical mixer 201 arranged underneath the batch mixer.

The twin-screw conical mixer has a mixing chamber 202 provided with an inlet mouth 203 and an outlet mouth 204.

Preferably, the inlet mouth 203 has a section that develops in the vicinity of the screws and has an area greater than or equal to 2000 cm².

Typically, the mixing chamber 202 consists of a first portion 202a proximal to the outlet mouth 204 and closed on the lateral development thereof and a second portion 202b, larger than and opposite to, the first portion and arranged at the inlet mouth 203 (and therefore, the second portion is laterally open at the inlet mouth).

The mixing chamber houses two conical counter-rotating screws 205 converging towards the outlet mouth. The acute angle 210 formed by the two axes of rotation of the screws is by way of example equal to 16°.

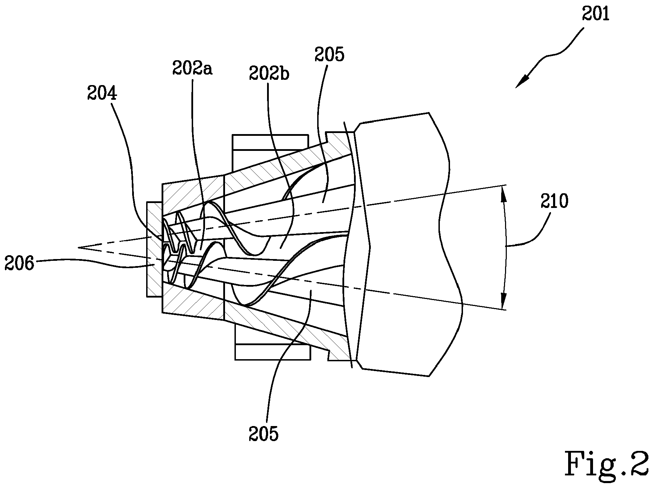

The twin-screw conical mixer is further provided with a door 206 adapted to fully open and close said outlet mouth 204. In figure 2, the door is schematically shown in the closed configuration of the outlet mouth, while in figure 1 it is shown in the open configuration of the outlet mouth 204.

Preferably, the screws of the twin-screw conical mixer are co-penetrating helical screws with pitch that decreases strictly monotonically going towards the outlet mouth 204. Typically, the screws are devoid of mixing sections, i.e. adapted to impart shear strains to the material being processed.

Preferably, each of said screws is driven by a dedicated motor (not shown) and the mixer comprises a synchronisation device (not shown) between the two screws which ensures the synchronous and counter-rotating rotation thereof.

Preferably, the twin-screw conical mixer comprises a loading hopper 207 having a lower end at the inlet mouth 203 and an upper end at the unloading mouth 110 of the batch mixer 101.

Preferably, the upper end of the loading hopper surrounds the unloading mouth 110 in tight contact with the batch mixer so as to establish continuity between the batch mixer and the twin-screw conical mixer.

Preferably, the twin-screw conical mixer includes a suction pump 208 having a suction mouth 209 at the lateral walls of the loading hopper.

Plant 1 preferably comprises a sheeting device 301 (by way of example a calender, as shown in figure 1, or an open mixer with counter-rotating rollers or open mill, not shown) arranged downstream of the twin-screw conical mixer.

Plant 1 preferably comprises a festoon system 401 arranged downstream of the sheeting device adapted to convey the compound away from the mixer and cool it down (for example by means of air jets). Typically, the festoon system comprises a tank 402 to wet the elastomeric compound with an anti-tackifier liquid.

Suitable conveyor belts 302 are typically positioned between the twin-screw conical mixer and the sheeting device and/or between the latter and the festoon system.

Plant 1 preferably comprises a loading station 501 in which the cooled elastomeric compound is arranged pitched on a pallet 502 for temporary storage, awaiting for the compound to be subjected to subsequent processing steps.

In use, plant 1 is adapted to carry out a process for producing a silica-filled elastomeric compound according to the present invention.

Said elastomeric compound 108 may be the masterbatch, i.e. an elastomeric compound that has the elastomeric base and the reinforcement filler already incorporated but in which the agents that promote the vulcanisation have not yet been incorporated in order to produce the final vulcanisable elastomeric compound adapted to the incorporation in the green tyre (for example in the form of a component of the tyre, such as typically the tread band). The vulcanising agents are typically incorporated in a further separate mixing step that takes place in a final mixer, as better explained hereinafter, in order to produce the final compound.

In order to produce the elastomeric compound 108 according to the present invention, it is contemplated to feed the elastomeric polymer 102 (for a total content equal by definition to 100 phr), at least 10 phr of a silica-based reinforcement filler 103 and at least one silane coupling agent 104 in the batch mixer 101. Then, the processing step of the ingredients introduced follows, which comprises several sub-steps including the incorporation of the reinforcement filler in the elastomeric polymer, the dispersion and distribution of the silica filler in the polymeric base, the introduction of additional ingredients such as plasticising oils, etc. Typically, during this process the piston performs several stroke cycles up and down, such as is known in the industry (see WO 00/59699 mentioned above).

At the end of the above process, the batch of intermediate compound 105 thus obtained is completely unloaded from the unloading mouth 110 of the batch mixer 101, and the silica-based reinforcement filler therein is substantially evenly distributed and dispersed in the elastomeric polymer and in which, however, according to the present invention, the silane coupling agent substantially has not reacted, or (as typically occurs) has reacted to a small extent, with the silica-based reinforcement filler.

According to the present invention, at least a substantial portion, if not substantially all, of the desired reaction between silica and silane takes place in the twin-screw conical mixer 201.

To this end, the entire batch of intermediate compound 105 is fed all at once to the twin-screw conical mixer. For example, the door that inferiorly closes the mixing chamber of the batch mixer 101 is opened so that the entire batch drops by gravity into hopper 207 up to reach the inlet mouth 203 of the twin-screw conical mixer.

Here, the intermediate compound 105 encounters screws 205, which have been previously set in rotation. The combination of the large section area of the inlet mouth 203, the large second portion 202b of the mixing chamber 202 and the large helical pitch and depth of screws 205 at the inlet mouth 203 allows a rapid introduction of the entire batch of intermediate compound 105 in the mixing chamber 202. Preferably, no other ingredient of the elastomeric compound 108, in addition to the intermediate compound 105, is introduced into the twin-screw conical mixer.

Upon feeding the intermediate compound 105 into the twin-screw conical mixer, the door is typically already in the closed configuration of the outlet mouth 204 (fig. 2) and, as mentioned, screws 205 are already rotating.

With the door in this configuration, the compound is processed in the mixing chamber 202 of the twin-screw conical mixer, where the silanisation takes place, so that when the silanisation has ended, door 206 is set to the open configuration of the outlet mouth (fig. 1) and the silanised elastomeric compound 108 is unloaded from the outlet mouth 204 of the twin-screw conical mixer, which has been left free.

During the processing in the conical mixer, typically the first portion 202a of the mixing chamber is completely filled by the compound, while the second portion 202b is only partially filled by the compound.

Due to the transport action carried out by screws 205 when rotating in the normal direction, and upon the locking action carried out by door 206, the compound is subjected to a recirculation of material in the longitudinal direction which promotes the mixing of the material, while not being subjected to shear strains as typically occurs in mixers such as the above batch mixers or continuous mixers.

Preferably, the mixing in the twin-screw conical mixer occurs by alternating at least one step of mixing with normal rotation of the screws with at least one step of mixing with reversed rotation of the screws. During the reversed rotation of the screws, the material being processed is carried away from door 206, to then be again pushed against door 206 during the normal rotation of the screws. This increases the mixing degree of the material.

Preferably, during the mixing in the twin-screw conical mixer, the temperature of the material being processed is maintained in a controlled range of values (typically 130° -140 °C), in order to promote the silica-silane reaction. To this end, the twin-screw reaction mixer is provided with a thermo-regulation system (typically liquid), not shown in the figures, which acts on the mixing chamber (for example a set of hydraulic conduits formed in the body of the mixer). Moreover, the rotation speed of the screws can be suitably varied as a function of the temperature detected, with a feedback cycle, in order to control the temperature of the material.

By way of example, the silanised elastomeric compound 108 unloaded in a continuous flow from the twin-screw conical mixer is shaped as a sheet by calender 301 and hence transported to the festoon system 401 to be wetted with a non-adhesive liquid and cooled.

Typically, the cooled elastomeric compound 108 is arranged pitched on a pallet 502 and stored waiting for the subsequent processing steps.

In order to obtain a final vulcanisable elastomeric compound, adapted to the incorporation into the green tyre, a final mixing step is typically carried out within the final mixer.

In this case, the final mixer is fed with the (cooled) elastomeric compound 108 and at least with the ingredients able to promote the cross-linking. The ingredients are then mixed in the final mixer capable of facilitating the cross-linking with the elastomeric compound 108 (typically by checking that the temperature does not rise to values that might trigger an at least partial vulcanisation, or scorching) in order to obtain a respective batch of final vulcanisable elastomeric compound which is finally entirely unloaded from said final mixer.

In one embodiment, the process includes a step of intermediate mixing between the silanisation and the final mixing, carried out in an intermediate mixer which is fed with said (cooled) silanised compound 108 and with activators containing zinc compounds and/or anti-ageing agents containing amino groups. After the mixing of these ingredients, the resulting compound is unloaded from the intermediate mixer. In this case, the compound fed to the final mixer is not compound 108 but the compound resulting from the intermediate mixing.

Typically, after the final mixing and/or the intermediate mixing, further handling and/or shaping steps of the respective elastomeric compound obtained follow, such as the passage in a conveyor and/or a sheeting device and a subsequent cooling into festoons, an extrusion into a semi-finished product, etc.

In one embodiment of the present invention (not shown), the final mixer can be a mixer separated from the batch mixer 101 described above, and the intermediate mixer may be a mixer separated from the batch mixer 101 and/or from the final mixer described above. For example, the final mixer and/or the intermediate mixer may comprise a continuous mixer. In such cases, a respective conveyor device separate from the twin-screw conical mixer described above may be arranged downstream (typically below the respective unloading mouth) of the final mixer and/or of the intermediate mixer. Moreover, one or more devices may be arranged downstream of the conveyor device comprising a sheeting device and/or a cooling system downstream of the sheeting device, and/or a loading station.

In one embodiment of the present invention, the final mixer and/or the intermediate physically coincide(s) with the batch mixer 101 described above. In other words, the elastomeric compound 108 is returned to the batch mixer 101 to be subjected to the above intermediate and, subsequently, final mixing. In this case, typically, the whole plant described above with reference to figure 1 is used for the intermediate mixing and/or for the final mixing. Therefore, the twin-screw conical mixer 201 may in this case be used as a conveyor device associated with the batch mixer 101, once door 206 is removed or kept open.

The present invention will be further described below by means of two test examples, the comparative example 1 and example 2 according to the present invention, which are given purely by way of example and without any limitation of the present invention.

Tables 1, 2 and 3 show the recipe of ingredients of a compound for the tread of a tyre, generally used in examples 1-2 (the amounts are given in phr).

**TABLE 1**

| COMPONENT | phr |
|---|---|
| natural rubber, STR 20 - Thaiteck Rubber | 15 |
| butadiene rubber, BR60 Europrene Neocis - Polimeri Europa | 15 |
| styrene-butadiene rubber, SLR 4630 - Styron | 96* |
| Silica Ultrasil 7000 GR - Evonik | 65 |
| bis[3-(triethoxysilyl)propyl]tetrasulphide - SI 69® - Evonik | 5.70 |
| Stearic acid - Undesa | 1.5 |
| Mixture of N-paraffin - Repsol | 1 |
| Oil MES - H&R | 5 |

| | |
|---|---|
| * Polymers extended with 37.5 phr of plasticising oil every 100 phr of dry elastomeric polymer, for a dry elastomeric polymer content equal to 70 phr | |

**TABLE 2**

| COMPONENT | phr |
|---|---|
| Zinc oxide - Rhein-Chemie | 2 |
| Antioxidant, 6PPD, N-(1,3-dimethylbutyl)-N'-phenyl-p-phenylenediamine - Eastman | 2.5 |

**TABLE 3**

| COMPONENT | phr |
|---|---|
| TBBS accelerant N-t-butyl-benzothiazyl-sulphenamide, Vulkacit® NZ/ECG - Lanxess | 2.6 |
| Sulphur - Zolfoindustria | 0.95 |

### Example 1 (Comparative)

### First step

All components listed in Table 1 were mixed together in an Intermix® mixer (model K7 of HF Group) operating under the following working conditions:
- mixing time: 250 seconds;
- filling factor: 65%;
- rotor speed: variable between 25-40 revolutions per minute in the mixing step and between 10-25 in the silanisation step;
- unloading temperature: 135 °C.

### Intermediate step

The elastomeric compound obtained in the first step, cooled to room temperature (23 °C), as well as all the ingredients in Table 2 were mixed together in an Intermix® mixer (model K7 of HF Group) operating under the following working conditions:
- mixing time: 140 seconds;
- filling factor: 65%;
- rotor speed: variable between 30-40 rpm;
- unloading temperature: 130 °C.

### Final step

The elastomeric compound obtained in the intermediate step, cooled to room temperature (23 °C), as well as all the ingredients in Table 3 were fed to an Intermix® mixer (model K7 of HF Group) and a final mixing was carried out operating under the following working conditions:
- mixing time: 120 seconds;
- filling factor: 60%;
- rotor speed: 30 revolutions per minute;
- unloading temperature: 100°C.

The final elastomeric compound unloaded from the Intermix® mixer was subsequently cooled to room temperature (23 °C).

### Example 2 (invention)

### First step

All components listed in Table 1 were mixed together in a Banbury® mixer (model F270) operating under the following working conditions:
- mixing time: 210 seconds;
- filling factor: 75%;
- rotor speed: variable between 25-40 rpm;
- unloading temperature: 135°C.

The resulting batch of intermediate elastomeric compound, equal to about 220 kg by weight, was fed, immediately after unloading from said Banbury® mixer, to a Colmec® CTM315 twin-screw conical mixer with the following characteristics:
- Maximum screw diameter 800 mm
- Minimum screw diameter 300 mm
- Screw length 1000 mm
- Angle between screws 16°
- Power of each motor 160 KW
- sectional area of the inlet mouth about 5000 cm²,
and further mixing was carried out, without the addition of any additional ingredient, by operating under the following working conditions:
- screw rotation speed of from 40 to 80 rpm,
- normal (n) - reversed (i) rotation profile: n-i-n-i-n
- respective mixing time: 45-15-45-15-30 seconds
- elastomeric compound temperature measured upon unloading from the extruder: 130 °C.

The elastomeric compound thus obtained was then subjected to the intermediate and final steps

### Intermediate step

The elastomeric compound obtained in the first step, cooled to room temperature (23 °C), as well as all the ingredients in Table 2 were mixed together in a Banbury® mixer (model F270) operating under the following working conditions:
- mixing time: 140 seconds;
- filling factor: 75%;
- rotor speed: variable between 30-40 rpm;
- unloading temperature: 130 °C.

### Final step

The elastomeric compound obtained in the intermediate step, cooled to room temperature (23 °C), as well as all the ingredients in Table 3 were fed to a Banbury® mixer (model F270) and a final mixing was carried out operating under the following working conditions:
- mixing time: 120 seconds;
- filling factor: 70%;
- rotor speed: 30 revolutions per minute;
- unloading temperature: 100°C.
The final elastomeric compound unloaded from the Banbury® mixer was subsequently cooled to room temperature (23 °C).

The elastomeric compounds obtained in Examples 1 and 2 were tested to evaluate the following properties: percentage of silanisation, Mooney viscosity (ML 1+4), elongation loads Ca1, Ca3, CR: the results obtained are shown in Table 4.
The percentage of silanisation was measured according to the above process on non-cross-linked samples extracted from the compound after the final step.
The Mooney viscosity ML (1+4) at 100 °C was measured according to the ISO 289-1: 2005 standard on non-cross-linked samples extracted from the compound after the final step.

The elongation loads Ca1, Ca3, CR (measured at 100%, 300%, respectively, of elongation and break) were measured according to the ISO 37 standard on samples extracted from the compound after the final step and after cross-linking.

The data shown in table 4, with the exception of the percentages of silanisation, are expressed for Example 2 as a percentage of the corresponding data obtained for Example 1 (arbitrarily set at 100).

**TABLE 4**

| EXAMPLE | Mooney viscosity (ML 1+4) (%) | Percentage of silanisation (%) | Ca1 (%) | Ca3 (%) | CR (%) |
|---|---|---|---|---|---|
| Example 1 (Comparative) | 100 | 96.9 | 100 | 100 | 100 |
| Example 2 (invention) | 99.4 | 97.7 | 96.6 | 96.1 | 103.5 |

The data shown in table 4 show that the elastomeric compounds obtained according to the present invention (Example 2), in which at least a substantial part of the silanisation takes place out of the batch mixer and in a twin-screw conical mixer, with a reduction of about 16% of the batch mixer occupancy time (40 seconds less out of a total of 250 s), have a degree of silanisation and a viscosity substantially equal to those of a compound entirely produced in batch mixers. Moreover, also the loads at the various elongations after cross-linking are substantially comparable, with an improvement advantage for the CR which increases by about 3% in the compound of the present invention.

## Claims

1. Process for producing an elastomeric compound (108) comprising at least one elastomeric polymer (102), at least 10 phr of a silica-based reinforcement filler (103) and at least one silane coupling agent (104), the process comprising:
- providing a batch mixer (101) comprising a mixing chamber, a pair of rotors housed in the mixing chamber and a piston arranged above the rotors and movable to and from the pair of rotors;
- feeding said batch mixer (101) with said at least one elastomeric polymer (102), said silica-based reinforcement filler (103) and said at least one silane coupling agent (104);
- mixing, in said batch mixer (101) and for a first predetermined time interval, said elastomeric polymer (102), said silica-based reinforcement filler (103) and said silane coupling agent (104) in a manner so as to obtain a batch of an intermediate compound (105) wherein said silica-based reinforcement filler is dispersed in said elastomeric polymer;
- completely unloading said batch of intermediate compound (105) from said batch mixer (101);
- providing a twin-screw conical mixer (201) having a mixing chamber (202) provided with an inlet mouth (203) and an outlet mouth (204), wherein the mixing chamber houses two conical screws (205), counter-rotating and converging towards the outlet mouth (204), the twin-screw conical mixer (201) being provided with a door (206) adapted to assume a closed configuration of said outlet mouth (204) and an open configuration of said outlet mouth (204);
- feeding said twin-screw conical mixer (201) with said batch of intermediate compound (105);
- mixing said intermediate compound in said twin-screw conical mixer (201) with said door (206) in said closed configuration of said outlet mouth (204) for a second predetermined time interval and under temperature control, in order to obtain said elastomeric compound (108);
- unloading said elastomeric compound (108) from said outlet mouth (204) of the twin-screw conical mixer (201) with said door (206) arranged in said open configuration, wherein in said unloaded elastomeric compound (108), an amount of said silane coupling agent has reacted with said silica-based reinforcement filler, said amount being greater than or equal to 50% of the fed silane coupling agent, and wherein at least 50% of said amount of silane coupling agent has reacted with said silica-based reinforcement filler during said step of mixing said intermediate compound in said twin-screw conical mixer (201) with the door (206) in said closed configuration.

2. Process as claimed in claim 1, wherein in said batch of intermediate compound (105) unloaded from the batch mixer (101), the percentage of silanisation is less than or equal to 30% and wherein in said elastomeric compound (108) unloaded from the twin-screw conical mixer (201) the percentage of silanisation is greater than or equal to 70%.

3. Process as claimed in any one of the preceding claims, wherein a total content by weight of said silane coupling agent fed to said batch mixer (101) is greater than or equal to 4% of the weight of said silica-based reinforcement filler and wherein the total content by weight of said silane coupling agent fed to said batch mixer (101) is less than or equal to 15% of the weight of said silica-based reinforcement filler.

4. Process as claimed in any one of the preceding claims, wherein said silane coupling agent is selected from the group: bis(2-triethoxysilyl-propyl)tetrasulfide, bis(3-trimethoxysilylpropyl)tetrasulfide, bis(2-trimethoxysilyl-ethyl)tetrasulfide, bis(3-triethoxysilyl-propyl)tetrasulfide.

5. Process as claimed in any one of the preceding claims, wherein an overall content of silica-based reinforcement filler in said elastomeric compound is greater than 30 phr, and/or less than 120 phr.

6. Process as claimed in any one of the preceding claims, wherein the entire content of elastomeric polymer and/or of silica-based reinforcement filler and/or of silane coupling agent of the elastomeric compound is fed into said batch mixer (101).

7. Process as claimed in any one of the preceding claims, wherein said screws (205) of the twin-screw conical mixer are co-penetrating and counter-rotating helical screws with variable pitch and wherein rotation axes of said screws form therebetween an acute angle (210) less than or equal to 30°, and/or greater than or equal to 10°.

8. Process as claimed in any one of the preceding claims, wherein said second predetermined time interval of mixing in said twin-screw conical mixer (201) with closed door (206) is greater than or equal to 60 seconds, and/or less than or equal to 300 s and wherein said first predetermined time interval of mixing in said batch mixer (101) is greater than or equal to 100 s, and/or less than or equal to 500 s.

9. Process as claimed in any one of the preceding claims, wherein said mixing in said twin-screw conical mixer (201) occurs by alternating at least one step of mixing with normal rotation of the screws with at least one step of mixing with reversed rotation of the screws.

10. Process as claimed in any one of the preceding claims, wherein during the mixing in said twin-screw conical mixer (201), a temperature in the internal mixing chamber (202) is maintained greater than or equal to 120°C, and/or less than or equal to 150°C.

11. Process as claimed in any one of the preceding claims, wherein said twin-screw conical mixer (201) is not fed with any further ingredient of the elastomeric compound (108), apart from said intermediate compound (105).

12. Process as claimed in any one of the preceding claims, wherein feeding said twin-screw conical mixer (201) with said batch of intermediate compound (105) occurs immediately after the unloading of the batch of intermediate compound from the batch mixer (101), the temperature of the intermediate compound fed to said twin-screw conical mixer being greater than or equal to 60°C.

13. Process as claimed in any one of the preceding claims, the process also comprising:
- providing an intermediate mixer;
- feeding said intermediate mixer with said elastomeric compound (108) unloaded from the twin-screw conical mixer and with one or more of the following ingredients: activators containing zinc compounds and anti-aging agents containing amino groups;
- mixing, in said intermediate mixer, said activators containing zinc compounds and/or components containing amino groups with said elastomeric compound;
- unloading the mixed elastomeric compound from said intermediate mixer.

14. Process as claimed in any one of the preceding claims, the process also comprising:
- providing a final mixer;
- feeding said final mixer with said elastomeric compound (108) unloaded from the twin-screw conical mixer or with said elastomeric compound unloaded from the intermediate mixer, and with ingredients capable of facilitating the cross-linking;
- mixing, in said final mixer, said ingredients capable of facilitating the cross-linking with said elastomeric compound in order to obtain a vulcanisable final elastomeric compound;
- unloading said final elastomeric compound from said final mixer.

15. Process for producing tyres comprising the process according to claim 14 and further comprising:
- building a green tyre comprising at least one component comprising said final elastomeric compound,
- subjecting the green tyre to moulding and vulcanisation in order to obtain a finished tyre;
wherein said at least one component is a structural element of the finished tyre selected from the group: tread band, under-layer, carcass layer, belt layer, sidewall, reinforced element, anti-abrasive layer.

## Patentansprüche

1. Verfahren zur Herstellung einer Elastomermischung (108), die mindestens ein Elastomerpolymer (102), mindestens 10 phr eines Verstärkungsfüllstoffs (103) auf Kieselsäurebasis und mindestens ein Silan-Kopplungsmittel (104) umfasst, wobei das Verfahren umfasst:
- Bereitstellen eines Chargenmischers (101), umfassend eine Mischkammer, ein Paar Rotoren, das in der Mischkammer untergebracht ist, und einen Kolben, der über den Rotoren angeordnet und hin zu und weg von dem Paar Rotoren beweglich ist;
- Beschicken des Chargenmischers (101) mit dem mindestens einen Elastomerpolymer (102), dem Verstärkungsfüllstoff (103) auf Kieselsäurebasis und dem mindestens einen Silan-Kopplungsmittel (104);
- Mischen des Elastomerpolymers (102), des Verstärkungsfüllstoffs (103) auf Kieselsäurebasis und des Silan-Kopplungsmittels (104) in dem Chargenmischer (101) ein erstes vorbestimmtes Zeitintervall lang in einer solchen Weise, dass eine Charge eines Zwischenprodukts (105) erhalten wird, wobei der Verstärkungsfüllstoff auf Kieselsäurebasis in dem Elastomerpolymer dispergiert ist;
- vollständiges Ausbringen der Charge des Zwischenprodukts (105) aus dem Chargenmischer (101);
- Bereitstellen eines konischen Doppelschneckenmischers (201) mit einer Mischkammer (202), die mit einer Einlassöffnung (203) und einer Auslassöffnung (204) versehen ist, wobei die Mischkammer zwei konische Schnecken (205) beherbergt, die gegenläufig sind und sich zur Auslassöffnung (204) hin einander nähern, wobei der konische Doppelschneckenmischer (201) mit einer Klappe (206) versehen ist, die geeignet ist, eine geschlossene Konfiguration der Auslassöffnung (204) bzw. eine offene Konfiguration der Auslassöffnung (204) als gegeben anzunehmen;
- Beschicken des konischen Doppelschneckenmischers (201) mit der Charge des Zwischenprodukts (105);
- Mischen des Zwischenprodukts in dem konischen Doppelschneckenmischer (201), während die Klappe (206) in der geschlossenen Konfiguration der Auslassöffnung (204) ist, ein zweites vorbestimmtes Zeitintervall lang und bei einer Temperaturreglung, um die Elastomermischung (108) zu erhalten;
- Ausbringen der Elastomermischung (108) aus der Auslassöffnung (204) des konischen Doppelschneckenmischers (201), während die Klappe (206) in der offenen Konfiguration angeordnet ist, wobei in der ausgebrachten Elastomermischung (108) eine Menge des Silan-Kopplungsmittels mit dem Verstärkungsfüllstoff auf Kieselsäurebasis reagiert hat, wobei die Menge größer oder gleich 50 % des eingesetzten Silan-Kopplungsmittels ist und wobei während des Schritts des Mischens des Zwischenprodukts in dem konischen Doppelschneckenmischer (201), während die Klappe (206) in der geschlossenen Konfiguration war, mindestens 50 % der Menge des Silan-Kopplungsmittels mit dem Verstärkungsfüllstoff auf Kieselsäurebasis reagiert hat.

2. Verfahren nach Anspruch 1, wobei in der Charge des Zwischenprodukts (105), die aus dem Chargenmischer (101) ausgebracht wird, der prozentuale Anteil der Silanisierung kleiner oder gleich 30 % ist und wobei in der Elastomermischung (108), die aus dem konischen Doppelschneckenmischer (201) ausgebracht wird, der prozentuale Anteil der Silanisierung größer oder gleich 70 % ist.

3. Verfahren nach einem der vorhergehenden Ansprüche, wobei der auf das Gewicht bezogene Gesamtgehalt des dem Chargenmischer (101) zugeführten Silan-Kopplungsmittels größer oder gleich 4 % des Gewichts des Verstärkungsfüllstoffs auf Kieselsäurebasis ist und wobei der auf das Gewicht bezogene Gesamtgehalt des dem Chargenmischer (101) zugeführten Silan-Kopplungsmittels kleiner oder gleich 15 % des Gewichts des Verstärkungsfüllstoffs auf Kieselsäurebasis ist.

4. Verfahren nach einem der vorhergehenden Ansprüche, wobei das Silan-Kopplungsmittel ausgewählt ist aus der Gruppe: Bis(2-triethoxysilyl-propyl)tetrasulfid, Bis(3-trimethoxysilyl-propyl)tetrasulfid, Bis(2-trimethoxysilylethyl)tetrasulfid, Bis(3-triethoxysilyl-propyl)tetrasulfid.

5. Verfahren nach einem der vorhergehenden Ansprüche, wobei der Gesamtgehalt an Verstärkungsfüllstoff auf Kieselsäurebasis in der Elastomermischung größer als 30 phr und/oder kleiner als 120 phr ist.

6. Verfahren nach einem der vorhergehenden Ansprüche, wobei der gesamte Gehalt, den die Elastomermischung an Elastomerpolymer und/oder an Verstärkungsfüllstoff auf Kieselsäurebasis und/oder an Silan-Kopplungsmittel aufweist, in den Chargenmischer (101) eingespeist wird.

7. Verfahren nach einem der vorhergehenden Ansprüche, wobei die Schnecken (205) des konischen Doppelschneckenmischers dicht kämmende und gegenläufige Schnecken mit veränderlicher Steigung sind und wobei die Drehachsen der Schnecken zwischen sich einen spitzen Winkel (210) kleiner oder gleich 30° und/oder größer oder gleich 10° bilden.

8. Verfahren nach einem der vorhergehenden Ansprüche, wobei das zweite vorbestimmte Zeitintervall des Mischens in dem konischen Doppelschneckenmischer (201) bei geschlossener Klappe (206) größer oder gleich 60 s und/oder kleiner oder gleich 300 s ist und wobei das erste vorbestimmte Zeitintervall des Mischens in dem Chargenmischer (101) größer oder gleich 100 s und/oder kleiner oder gleich 500 s ist.

9. Verfahren nach einem der vorhergehenden Ansprüche, wobei das Mischen in dem konischen Doppelschneckenmischer (201) durch abwechselndes Ausführen mindestens eines Schritts des Mischens mit normaler Drehung der Schnecken und mindestens eines Schritts des Mischens mit Rückdrehung der Schnecken erfolgt.

10. Verfahren nach einem der vorhergehenden Ansprüche, wobei während des Mischens in dem konischen Doppelschneckenmischer (201) die Temperatur in der inneren Mischkammer (202) größer oder gleich 120 °C und/oder kleiner oder gleich 150 °C gehalten wird.

11. Verfahren nach einem der vorhergehenden Ansprüche, wobei der konische Doppelschneckenmischer (201) abgesehen von dem Zwischenprodukt (105) mit keinem weiteren Bestandteil der Elastomermischung (108) beschickt wird.

12. Verfahren nach einem der vorhergehenden Ansprüche, wobei das Beschicken des konischen Doppelschneckenmischers (201) mit der Charge des Zwischenprodukts (105) unmittelbar nach dem Ausbringen der Charge des Zwischenprodukts aus dem Chargenmischer (101) erfolgt, sodass die Temperatur des Zwischenprodukts, das dem konischen Doppelschneckenmischer zugeführt wird, größer oder gleich 60 °C ist.

13. Verfahren nach einem der vorhergehenden Ansprüche, wobei das Verfahren außerdem umfasst:
- Bereitstellen eines Zwischenmischers;
- Beschicken des Zwischenmischers mit der aus dem konischen Doppelschneckenmischer ausgebrachten Elastomermischung (108) und mit einem oder mehreren der folgenden Zusatzstoffe: Aktivatoren, die Zinkverbindungen enthalten, und Alterungsschutzmittel, die Aminogruppen enthalten;
- Mischen, in dem Zwischenmischer, der Aktivatoren, die Zinkverbindungen enthalten, und/oder der Komponenten, die Aminogruppen enthalten, mit der Elastomermischung;
- Ausbringen der gemischten Elastomermischung aus dem Zwischenmischer.

14. Verfahren nach einem der vorhergehenden Ansprüche, wobei das Verfahren außerdem umfasst:
- Bereitstellen eines Fertigmischers;
- Beschicken des Fertigmischers mit der aus dem konischen Doppelschneckenmischer ausgebrachten Elastomermischung (108) oder mit der aus dem Zwischenmischer ausgebrachten Elastomermischung und mit Zusatzstoffen, die fähig sind, die Vernetzung zu ermöglichen.
- Mischen, in dem Fertigmischer, der Zusatzstoffe, die fähig sind, die Vernetzung zu ermöglichen, mit der Elastomermischung, um eine vulkanisierbare fertige Elastomermischung zu erhalten;
- Ausbringen der fertigen Elastomermischung aus dem Fertigmischer.

15. Verfahren zur Herstellung von Reifen, umfassend das Verfahren nach Anspruch 14 und weiter umfassend:
- Aufbauen eines Reifenrohlings, der mindestens eine Komponente umfasst, die die fertige Elastomermischung umfasst,
- Unterziehen des Reifenrohlings einem Formen und Vulkanisieren, um einen fertigen Reifen zu erhalten;
wobei die mindestens eine Komponente ein Strukturelement des fertigen Reifens ist, das ausgewählt ist aus der Gruppe: Laufflächenband, Zwischenschicht, Karkasse, Gürtellage, Seitenwand, verstärktes Element, Verschleißschutzschicht.

## Revendications

1. Procédé de production d'un composé élastomère (108) comprenant au moins un polymère élastomère (102), au moins 10 phr d'une charge de renforcement à base de silice (103) et au moins un agent de couplage de type silane (104), le procédé comprenant le fait :
- de fournir un mélangeur discontinu (101) comprenant une chambre de mélange, une paire de rotors reçus dans la chambre de mélange et un piston agencé au-dessus des rotors et mobile vers et depuis la paire de rotors ;
- d'alimenter ledit mélangeur discontinu (101) en ledit au moins un polymère élastomère (102), ladite charge de renforcement à base de silice (103) et ledit au moins un agent de couplage de type silane (104) ;
- de mélanger, dans ledit mélangeur discontinu (101) et pendant un premier intervalle de temps prédéterminé, ledit polymère élastomère (102), ladite charge de renforcement à base de silice (103) et ledit agent de couplage de type silane (104) de manière à obtenir un lot d'un composé intermédiaire (105) dans lequel ladite charge de renforcement à base de silice est dispersée dans ledit polymère élastomère ;
- de décharger complètement ledit lot de composé intermédiaire (105) dudit mélangeur discontinu (101) ;
- de fournir un mélangeur conique à double vis (201) ayant une chambre de mélange (202) munie d'une bouche d'entrée (203) et d'une bouche de sortie (204), où la chambre de mélange reçoit deux vis coniques (205), contrarotatives et convergeant vers la bouche de sortie (204), le mélangeur conique à double vis (201) étant muni d'une porte (206) adaptée pour adopter une configuration fermée de ladite bouche de sortie (204) et une configuration ouverte de ladite bouche de sortie (204) ;
- d'alimenter ledit mélangeur conique à double vis (201) en ledit lot de composé intermédiaire (105) ;
- de mélanger ledit composé intermédiaire dans ledit mélangeur conique à double vis (201) avec ladite porte (206) dans ladite configuration fermée de ladite bouche de sortie (204) pendant un deuxième intervalle de temps prédéterminé et sous régulation de température, afin d'obtenir ledit composé élastomère (108) ;
- de décharger ledit composé élastomère (108) de ladite bouche de sortie (204) du mélangeur conique à double vis (201) avec ladite porte (206) agencée dans ladite configuration ouverte, où dans ledit composé élastomère déchargé (108), une quantité dudit agent de couplage de type silane a réagi avec ladite charge de renforcement à base de silice, ladite quantité étant supérieure ou égale à 50% de l'agent de couplage de type silane introduit, et où au moins 50% de ladite quantité d'agent de couplage de type silane a réagi avec ladite charge de renforcement à base de silice pendant ladite étape de mélange dudit composé intermédiaire dans ledit mélangeur conique à double vis (201) avec la porte (206) dans ladite configuration fermée.

2. Procédé tel que revendiqué dans la revendication 1, dans lequel, dans ledit lot de composé intermédiaire (105) déchargé du mélangeur discontinu (101), le pourcentage de silanisation est inférieur ou égal à 30% et dans lequel, dans ledit composé élastomère (108) déchargé du mélangeur conique à double vis (201), le pourcentage de silanisation est supérieur ou égal à 70%.

3. Procédé tel que revendiqué dans l'une quelconque des revendications précédentes, dans lequel une teneur totale en poids dudit agent de couplage de type silane introduit dans ledit mélangeur discontinu (101) est supérieure ou égale à 4% du poids de ladite charge de renforcement à base de silice et dans lequel la teneur totale en poids dudit agent de couplage de type silane introduit dans ledit mélangeur discontinu (101) est inférieure ou égale à 15% du poids de ladite charge de renforcement à base de silice.

4. Procédé tel que revendiqué dans l'une quelconque des revendications précédentes, dans lequel ledit agent de couplage de type silane est choisi dans le groupe constitué : de bis(2-triéthoxysilyl-propyl)tétrasulfure, de bis(3-triméthoxysilylpropyl)tétrasulfure, de bis (2-triméthoxysilyl-éthyl)tétrasulfure, de bis (3-triéthoxysilyl-propyl)tétrasulfure.

5. Procédé tel que revendiqué dans l'une quelconque des revendications précédentes, dans lequel une teneur globale de charge de renforcement à base de silice dans ledit composé élastomère est supérieure à 30 phr, et/ou inférieure à 120 phr.

6. Procédé tel que revendiqué dans l'une quelconque des revendications précédentes, dans lequel le contenu entier de polymère élastomère et/ou de charge de renforcement à base de silice et/ou d'agent de couplage de type silane du composé élastomère est introduit dans ledit mélangeur discontinu (101).

7. Procédé tel que revendiqué dans l'une quelconque des revendications précédentes, dans lequel lesdites vis (205) du mélangeur conique à double vis sont des vis hélicoïdales co-pénétrantes et contrarotatives à pas variable et dans lequel les axes de rotation desdites vis forment entre eux un angle aigu (210) inférieur ou égal à 30°, et/ou supérieur ou égal à 10°.

8. Procédé tel que revendiqué dans l'une quelconque des revendications précédentes, dans lequel ledit deuxième intervalle de temps prédéterminé de mélange dans ledit mélangeur conique à double vis (201) avec porte fermée (206) est supérieur ou égal à 60 secondes, et/ou inférieur ou égal à 300 s et dans lequel ledit premier intervalle de temps prédéterminé de mélange dans ledit mélangeur discontinu (101) est supérieur ou égal à 100 s, et/ou inférieur ou égal à 500 s.

9. Procédé tel que revendiqué dans l'une quelconque des revendications précédentes, dans lequel ledit mélange dans ledit mélangeur conique à double vis (201) a lieu en alternant au moins une étape de mélange avec rotation normale des vis avec au moins une étape de mélange avec rotation inversée des vis.

10. Procédé tel que revendiqué dans l'une quelconque des revendications précédentes, dans lequel pendant le mélange dans ledit mélangeur conique à double vis (201), une température dans la chambre de mélange interne (202) est maintenue supérieure ou égale à 120°C, et/ou inférieure ou égale à 150°C.

11. Procédé tel que revendiqué dans l'une quelconque des revendications précédentes, dans lequel ledit mélangeur conique à double vis (201) n'est alimenté en aucun ingrédient supplémentaire du composé élastomère (108), à l'exception dudit composé intermédiaire (105).

12. Procédé tel que revendiqué dans l'une quelconque des revendications précédentes, dans lequel l'alimentation dudit mélangeur conique à double vis (201) en ledit lot de composé intermédiaire (105) a lieu immédiatement après le déchargement du lot de composé intermédiaire du mélangeur discontinu (101), la température du composé intermédiaire introduit dans ledit mélangeur conique à double vis étant supérieure ou égale à 60°C.

13. Procédé tel que revendiqué dans l'une quelconque des revendications précédentes, le procédé comprenant également le fait :
- de fournir un mélangeur intermédiaire ;
- d'alimenter ledit mélangeur intermédiaire en ledit composé élastomère (108) déchargé du mélangeur conique à double vis et en un ou plusieurs des ingrédients suivants : des activateurs contenant des composés de zinc et des agents antivieillissement contenant des groupes amino ;
- de mélanger, dans ledit mélangeur intermédiaire, lesdits activateurs contenant des composés de zinc et/ou lesdits composants contenant des groupes amino avec ledit composé élastomère ;
- de décharger le composé élastomère mélangé dudit mélangeur intermédiaire.

14. Procédé tel que revendiqué dans l'une quelconque des revendications précédentes, le procédé comprenant également le fait :
- de fournir un mélangeur final ;
- d'alimenter ledit mélangeur final en ledit composé élastomère (108) déchargé du mélangeur conique à double vis ou en ledit composé élastomère déchargé du mélangeur intermédiaire, et en des ingrédients capables de faciliter la réticulation ;
- de mélanger, dans ledit mélangeur final, lesdits ingrédients capables de faciliter la réticulation avec ledit composé élastomère afin d'obtenir un composé élastomère final pouvant être vulcanisé ;
- de décharger ledit composé élastomère final dudit mélangeur final.

15. Procédé de production de pneus comprenant le procédé selon la revendication 14 et comprenant en outre le fait :
- de construire un pneu cru comprenant au moins un composant comprenant ledit composé élastomère final,
- de soumettre le pneu cru au moulage et à la vulcanisation afin d'obtenir un pneu fini ;
dans lequel ledit au moins un composant est un élément structurel du pneu fini sélectionné dans le groupe constitué : de bande de roulement, de sous-couche, de couche de carcasse, de couche de ceinture, de flanc, d'élément renforcé, de couche anti-abrasive.
